(19) **Europäisches Patentamt / European Patent Office / Office européen des brevets**

(11) **EP 4 625 268 A1**

(12) **EUROPEAN PATENT APPLICATION**

(43) Date of publication:
01.10.2025 Bulletin 2025/40

(21) Application number: 24305495.4

(22) Date of filing: 29.03.2024

(51) International Patent Classification (IPC):
*G06N 10/40* (2022.01)

(52) Cooperative Patent Classification (CPC):
G06N 10/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Alice & Bob**
**75015 Paris (FR)**

(72) Inventors:
• **BANYS, Danielius**
**75015 Paris (FR)**
• **RAUTSCHKE, Felix**
**75015 Paris (FR)**

(74) Representative: **Cabinet Netter**
**36, avenue Hoche**
**75008 Paris (FR)**

(54) **ELECTRICALLY CONDUCTING CIRCUIT WITH A MAGNETIC-FLUX-TUNABLE ELEMENT**

(57) The is provided an electrically conducting circuit (403), comprising: a magnetic-flux-tunable element (407) comprising a first flux-sensitive portion (402) and a second flux-sensitive portion (404), wherein the electric characteristics of the magnetic-flux-tunable element (407) depend on both a magnetic flux threading the first flux-sensitive portion (402) and on a magnetic flux threading the second flux-sensitive portion (404); and a first conducting flux bias line portion (412) and a second conducting flux bias line portion (414), each portion passing adjacent to the magnetic-flux-tunable element (407), and each conducting flux bias line portion having: (i) a respective first distal end (416;418) configured to directly receive and directly return a current from a current source, and (ii) a respective second distal end (424;426) adjacent to the magnetic-flux-tunable element (407). The second distal ends (424;426) face towards each other and are separated from each other by a spacing; wherein the second distal ends (424;426) are directly connected to each other across the spacing via a conducting bridging portion (428); and wherein the conducting bridging portion (428) is connected to ground.

Fig. 4

## Description

FIELD OF THE INVENTION

The present invention relates generally to electrically conducting circuits whose electric characteristics depend on different magnetic fluxes threading different portions of a magnetic-flux tunable element. In particular, the present invention relates to the flux bias lines used to generate the magnetic fluxes, which may be used to control the electric characteristics of superconducting circuits.

BACKGROUND

A magnetic-flux-tunable element has electrical characteristics which depend on a magnetic flux threading through a portion of the element. Magnetic-flux-tunable elements are thus commonly used in electrically conducting circuits to control the properties of the circuit by controlling the application of a magnetic field. In particular, in the field of superconducting circuits, superconducting loops comprising one or more Josephson junctions disposed along the superconducting path are often used, for instance to tune the frequency-response of certain components of the superconducting circuit. An example of such a magnetic-flux-tunable element is a superconducting interference device (SQUID), which is highly sensitive to the amount of magnetic flux threaded through the loop of the SQUID.

It has previously been discovered that magnetic-flux-tunable elements having at least two flux-sensitive portions may exhibit more complex and advantageous behaviour, as the electric characteristics of the magnetic-flux-tunable element depend on the specific magnetic flux threading each of the flux-sensitive portions. An example of such a magnetic-flux-tunable element is an asymmetrically threaded SQUID (ATS), which is an inductive dipole element formed by a pair of Josephson junctions being shunted by an inductance such that each junction forms a separate loop with the inductance. The ATS is thus sensitive to the magnetic flux threaded through each of the two loops. By operating the ATS at a particular flux bias working point (wherein a different magnetic flux is threaded through each loop), the ATS may be used to engineer a two-to-one boson exchange between a high quality "memory" resonator and a lossy resonator, to thereby stabilize a so-called cat-qubit in the memory resonator.

The different magnetic fluxes may be applied by using two or more on-chip conducting lines, called flux bias lines, which pass sufficiently close to the flux sensitive portions of the magnetic-flux-tunable element. As an electric current is run through the flux bias lines, a corresponding magnetic field is generated which is directed to pass through the flux sensitive portions. To economise chip real-estate, two flux bias lines are typically operated together in a first mode to thread both portions with the same amount of flux (by running particular currents through the lines such that the lines operate in a common or sigma flux bias mode), and operated together in a second mode to thread both portions with an equal but opposite amount of flux (by running particular currents through the lines such that the lines operate in a differential or delta flux bias mode).

By controlling the ratio of one mode with respect to the other, a range of different magnetic fluxes may be threaded through the two different magnetic-flux-sensitive portions of a tunable element. However, prior art designs have typically resulted in poor application of both the common and differential bias modes or poor application of at least the differential mode. This may make it difficult or impossible to find a particular flux bias working point with sufficient precision (such as for the purposes of stabilizing a sufficiently long-lived cat-qubit for quantum computing purposes), and/or may negatively impact the amount of phase noise experienced at a particular flux bias working point.

Moreover, prior art designs may induce a greater amount of stray currents which are emitted from the flux bias lines and propagate through the surrounding ground plane of a chip. Such stray currents may induce further unwanted magnetic fluxes in other magnetic-flux-tunable elements near-by on the chip, thus generating undesirable flux crosstalk.

The present invention seeks to address one or more of these issues.

SUMMARY

In a first aspect, there is provided an electrically conducting circuit, comprising: a magnetic-flux-tunable element comprising a first flux-sensitive portion and a second flux-sensitive portion, wherein the electric characteristics of the magnetic-flux-tunable element depend on both a magnetic flux threading the first flux-sensitive portion and on a magnetic flux threading the second flux-sensitive portion; and a first conducting flux bias line portion and a second conducting flux bias line portion, each portion passing adjacent to the magnetic-flux-tunable element. Each conducting flux bias line portion has: (i) a respective first distal end configured to directly receive and directly return a current from a current source, and (ii) a respective second distal end adjacent to the magnetic-flux-tunable element; wherein the second distal ends face towards each other and are separated from each other by a spacing; wherein the second distal ends are directly connected to each other across the spacing via a conducting bridging portion; and wherein the conducting bridging portion is connected to ground.

As will be appreciated, each flux bias line portion is comprised of an electrically conducting portion and a pair of insulating portions either side of the electrically conducting portion, such that electrical current is directed along the electrically conducting portion of the flux bias line portion. When current flows along the first and/or the second flux bias line portions, a corresponding magnetic flux threads the first and/or second flux-sensitive portions of the magnetic-flux-tunable element.

As such, the first and second conducting flux bias line portions can be viewed as forming a single conducting line which is interrupted by the conducting bridging portion. The single conducting line thus comprises two distinct distal ends, one of which is the first distal end of the first conducting flux bias line portion configured to directly receive and directly return a current from a current source, the other of which is the first distal end of the second conducting flux bias line portion configured to directly receive and directly return a current from a current source. The conducting bridging portion may be thus positioned adjacent to the magnetic-flux-tunable element, and enables current to flow out of the single conducting line to return to ground. In this picture, the conducting bridging portion therefore defines (and directly connects) the second distal ends of the first and second conducting flux bias line portions. The present Inventors have discovered that, as the first and second conducting flux bias line portions essentially form a single conducting line which is interrupted only by the conducting bridging portion, the present invention may mitigate or reduce flux crosstalk with other nearby magnetic-flux-tunable elements sharing the same ground (e.g, sharing a conducting metallic ground plane), by reducing the amount of stray currents produced during the flux biasing mode when current is flown in the opposing directions along the first and second conducting flux bias line portions. Moreover, the present invention significantly reduces RF transmission between the conducting flux bias line portions of the electrically conducting circuit and the conducting flux bias line portions of a similar but adjacent electrically conducting circuit.

By the second distal ends being "directly" connected to each other, this means that no other circuit element is positioned in the spacing between the second distal ends. Said otherwise, the conducting bridging portions comprises the shortest possible conductive path between the second distal ends. Similarly, by the first distal ends being configured to "directly" receive and "directly" return a current from a current source, this means that no other circuit element is positioned in the between the first distal ends and the current source such that current can flow directly from the current source to the first distal end (and onwards through conducting flux line portion) and that current can flow directly from the first distal end to return back to the current source without significantly dispersing through another circuit element or portion. For instance, by being configured to "directly" receive and "directly" return a current from a current source, the first distal ends cannot receive current dispersively propagating through a surrounding metallic ground plane.

The first distal ends being configured to both directly receive a current from a current source and directly return a current from a current source (not necessarily the same current in terms of magnitude and direction) enables the electrically conducting circuit to be operated in: (i) a sigma mode of operation (such that a first magnetic flux is threaded through the first flux-sensitive portion and a second magnetic flux threading the second flux-sensitive portion, wherein the first and second magnetic fluxes are threaded in the same direction); and (ii) a delta mode of operation (such that a first magnetic flux is threaded through the first flux-sensitive portion and a second magnetic flux threading the second flux-sensitive portion, wherein the first and second magnetic fluxes are threaded in the opposite directions). For instance, the sigma mode may be achieved by a first current being flown through the first conducting flux bias line by the first distal end thereof directly receiving a current from a current source, combined with a second current being flown through the second conducting flux bias line by the first distal end thereof directly returning a current from a current source. Conversely, the delta mode may be achieved by achieved by a first current being flown through the first conducting flux bias line by the first distal end thereof directly receiving a current from a current source, combined with a second current being flown through the second conducting flux bias line by the first distal end thereof also directly receiving a current from a current source. The sigma and delta modes may be operated congruently (e.g. simultaneously) or intermittently (one at a time).

Thus, the first distal end of each conducting flux bias line portion may be directly connected to a conducting line from a current source, such that at no point between the current source to the second distal end of the conducting flux line is the current path connected to ground.

The current sources which provide currents to the first and second conducting flux bias line portions may be the same current source, or may be different current sources.

The conducting bridging portion may comprise a directional conducting portion configured to enable current to flow in a direction towards the magnetic-flux-tunable element.

The conducting bridging portion may be thus positioned adjacent to the magnetic-flux-tunable element, and enables current to flow out of the single conducting line to return to ground in a direction towards and optionally away from the magnetic-flux-tunable element. Thus, due to the directional conducting portion enabling current to flow in a direction towards the magnetic-flux-tunable element, the present invention enables an increased mutual inductance in the flux biasing mode when current is flown in the same direction along the first and second conducting flux bias line portions, relative to the mutual inductance in the flux biasing mode when current is flown in the opposing directions along the first and second conducting flux bias line portions.

The conducting bridging portion may be connected to ground via the directional conducting portion configured to enable current to flow in a direction towards the magnetic-flux-tunable element.

The conducting bridging portion may comprise a directional conducting portion configured to enable current to flow in a direction away from the magnetic-flux-tunable element.

That is, the conducting bridging portion may be configured to enable at least some current to flow to ground in a direction away from the magnetic-flux tunable element.

The conducting bridging portion may be connected to ground via the directional conducting portion configured to enable current to flow in a direction away from the magnetic-flux-tunable element.

In embodiments wherein there are directional conducting portions configured to enable current to flow both in a direction towards and in a direction away from the magnetic-flux-tunable element, the directional conducting portion configured to enable current to flow in a direction towards the magnetic-flux-tunable element may be deemed the "first" directional conducting portion, and the directional conducting portion configured to enable current to flow in a direction away from the magnetic-flux-tunable element may be deemed the "second" directional conducting portion. As will be appreciated, when the conducting bridging portions comprise both the first and second directional conducting portions, this enables the mutual inductance to be substantially similar in both the sigma flux bias mode (wherein currents are run through the conducting flux bias line portions such that a substantially equal amount of magnetic flux threads both the first and the second flux-sensitive portions) and delta flux bias modes (wherein currents are run through the conducting flux bias line portions such that a differential magnetic flux threads the first and the second flux-sensitive portions, in particular being equal but opposite). This is advantageous because the induced flux noise in the flux-sensitive portions will be the same in each bias mode, which equalizes the amount of generated flux noise due to the noise on the voltage sources. It may be beneficial to have symmetric generation of flux noise in the different modes when implementing flux noise reduction processes or schemes (such as calibration processes).

The conducting bridging portion may be connected to ground via both directional conducting portions.

The electrically conducting circuit may comprise a conducting plane, wherein the conducting plane is ground.

The conducting bridging portion may be directly connected to the conducting plane.

As will be appreciated, by being "directly" connected means that conducting bridging portion is comprised of planar conducting material which is co-planar with and galvanically connected to the conducting plane.

The first flux bias line may comprise a turning portion which passes adjacent to the first flux-sensitive portion of the magnetic-flux-tunable element, and wherein the second flux bias line may comprise a turning portion which passes adjacent to the second flux-sensitive portion of the magnetic-flux-tunable element.

By providing a turning portion, the current path enabled by the flux bias line portions may be brought much closer to the magnetic-flux-tunable element, thereby increasing the mutual inductance (i.e. increasing the amount of magnetic flux which may be thread through each of the flux-sensitive portions for a set amount of electrical current applied through the flux bias line portions).

Each of the flux bias line portions may comprise a parallel conducting portion between the first distal end and the turning portion, wherein the parallel conducting portion of the first flux bias line portion is substantially parallel to the parallel conducting portion of the second flux bias line portion.

The turning portion may be curvilinear.

This may avoid sharp conducting points in the turning portions, and thus reduces the build up of electric fields generated due to the turning portions.

Each of the conducting flux bias lines may be positioned a distance from the magnetic flux tunable element of less than 1 mm as measured along the shortest conceptual line drawn between the centre point of the second distal end and the conceptual line passing through the centre of both flux-sensitive portions.

The distance may be between 1 micron and 500 microns, preferably between 10 micron and 100 microns, and most preferably between 30 microns and 40 microns.

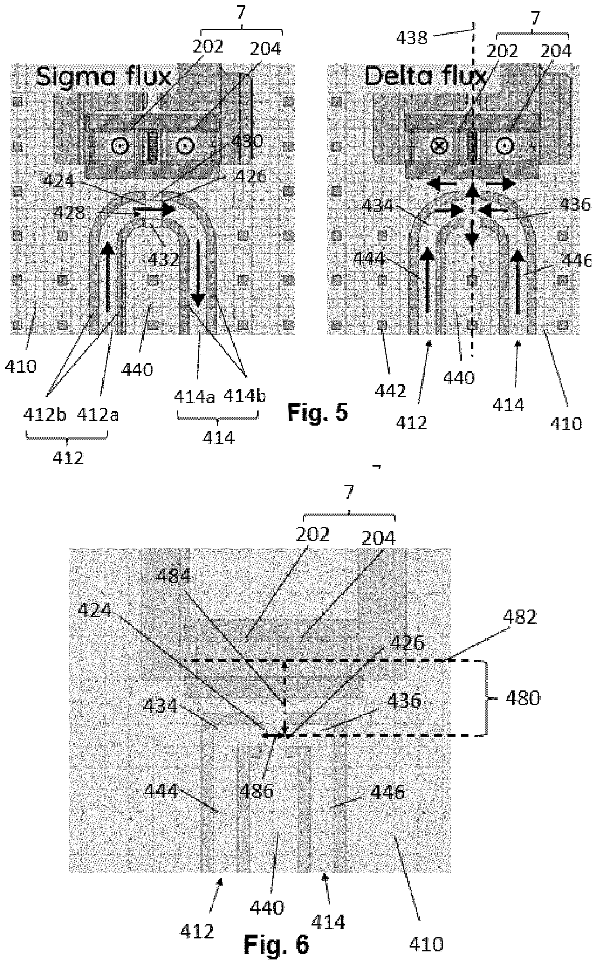

The spacing separating the second distal ends of the conducting flux bias line portions is preferably between 1 and 100 microns, and most preferably on the order of 10 microns, as measured along the shortest conceptual line (as shown by the arrowed line 486 in Figure 6) drawn between the centre point of the second distal end of the first conducting flux bias line portion and the centre point of the second distal end of the second conducting flux bias line portion. Again, the present Inventors envisage other embodiments of the ATS or other flux-tunable elements which may require the second distal ends of the conducting flux bias line portions to be closer or further away from the each other, as appropriate.

The spacing may have a separation of less than 500 microns as measured between the centre point of the second distal end of the first conducting flux bias line portion and the centre point of the second distal end of the second conducting flux bias line portion.

The distance may be between 1 micron and 100 microns, and preferably between 5 micron and 20 microns. The spacing may be such that the centre points of the second distal ends are almost touching, such as between 0.1 micron and 1 micron.

The electrically conducting circuit may comprise one or more return current portions which connect the conducting bridging portion to ground.

The first flux-sensitive portion and the second flux-sensitive portion may be positioned either side of an axis; wherein the first flux-sensitive portion and the second flux-sensitive portion may share a connecting element which is substantially aligned with the axis; and wherein the first and second flux bias line portions may be positioned either side of the axis such that the respective second distal ends face each other either side of the axis.

The first flux-sensitive portion and the second flux-sensitive portion may be substantially reflection symmetric about the axis, and wherein the first and second flux bias line portions may be substantially reflection symmetric about the axis.

The electrically conducting circuit may be comprised of electrically conducting material deposited on a dielectric substrate.

The first and second flux-sensitive portions, the first and second conducting flux bias line portions, and the conducting bridging portion may all be co-planar. The ground may be a conducting planae which is also co-planar. More generally, any electrically conducting element of the electrically conducting circuit in any of the embodiments described herein may also be substantially co-planar. Thus, "adjacent" in such embodiments is taken to mean "adjacent in the plane".

The flux bias line portions may thus be etched from a plane of electrically conducting material (to thereby reveal the underlying dielectric substrate) such that the insulating portions which define the flux bias line portions are provided by the gaps etched from electrically conducting material. The plane of electrically conducting from which the flux bias line portions are etched may be the ground plane.

The magnetic-flux-tunable element may be galvanically coupled to the flux bias line portions, such that there is no insulating region between the magnetic-flux-tunable element and the ground plane in which the flux bias ines are provided/etched.

The electrically conducting circuit may comprise current guiding portions. For instance, one or both of the flux bias line portions may comprise a current guiding portion and/or the conducting bridging portion may comprise a current guiding portion; The current guiding portion(s) may be configured so as to guide current to thereby increase or decrease current flow during operation, so as to tune the mutual inductance between a flux bias line portion and one of the flux-sensitive portions of the magnetic-flux-tunable element.

Each flux bias line portion is comprised of an electrically conducting portion and a pair of insulating portions either side of the electrically conducting portion. The pair of insulating portions may each terminate, and the second distal end may be defined as the conceptual line connecting the regions wherein each of the terminating portions terminate.

Alternatively, only one of the insulating portions may terminate, such that the other of the insulating portions is an insulating portion which defines both the first flux bias line portion and the second flux bias line portion (namely, it is a continuous insulating portion defining and shared by both flux bias line portions). In this embodiment, the second distal end may be defined as the conceptual line perpendicular to the region said one of the insulating portions terminates which connects to said other of the insulating portions which is an insulating portion which defines both the first flux bias line portion and the second flux bias line portion.

The pair of insulating portions may be substantially parallel.

Each of the flux bias line portions may be a co-planar waveguide (CPW) comprised of the electrically conducting portion and a surrounding conducting plane, wherein the insulating portions of the flux bias line portion separates the electrically conducting portion from the surrounding conducting plane. The surrounding plane of both CPW flux bias line portions may be the same ground plane. The CPW flux bias line portions may be positioned such that a shared co-planar conducting portion of the surrounding plane is positioned directly between the CPW flux bias line portions. In embodiments comprising a directional conducting portion configured to enable current to flow in a direction away from the magnetic-flux-tunable element, the shared co-planar conducting portion may be the directional conducting portion configured to enable current to flow in a direction away from the magnetic-flux-tunable element, and further the conducting bridging portion may be connected to ground via the shared co-planar conducting portion.

The electrically conducting circuit may be a superconducting circuit.

That is, the electric current conducting elements of the circuit may be fabricated from a material which exhibits superconductivity when operated at a low enough temperature. Thus, the first and second conducting flux bias line portions may be both superconducting flux bias line portions, and the conducting bridging portion may be a superconducting bridging portion.

The conducting plane may be a superconducting plane.

The directional conducting portion configured to enable current to flow in a direction towards the magnetic-flux-tunable element may be a directional superconducting portion.

The directional conducting portion configured to enable current to flow in a direction away from the magnetic-flux-tunable element may be a directional superconducting portion.

The connecting element shared by the first flux-sensitive portion and the second flux-sensitive portion may be a superconducting connecting element.

The first and second flux-sensitive portions may each be superconducting loops.

The first and second flux-sensitive portions may each comprise one or more Josephson junctions. The first and second flux-sensitive portions may together share one or more Josephson junctions.

Generally, any element, part, or portion of the electrically conducting circuit which is electrically conducting may be formed from a superconducting material. By superconducting material, it is understood to mean a material which is superconducting in a temperature regime beneath a particular material-dependent critical temperature. For instance, superconducting material is for example aluminum, tantalum or niobium. The dielectric substrate may be for example silicon or sapphire. Of course, other materials may be considered, either for the dielectric substrate or the superconducting material.

The magnetic-flux-tunable element may be an asymmetrically biased SQUID (ATS) comprised of a pair of non-linear elements shunted by an inductor, wherein the inductor and one of the non-linear elements together form part of a first superconducting loop delimiting the first flux-sensitive portion, and wherein the inductor and the other of the non-linear elements together form part of a second superconducting loop delimiting the second flux-sensitive portion.

The pair of non-linear elements may each be a Josephson junction, preferably each being of substantially the same Josephson energy.

The inductor may be comprised of a linear array of Josephson junctions, for instance comprising at least 3 Josephson junctions. The linear array of Josephson junctions may comprise 4, 5, 6, 7 or greater than 7 Josephson junctions.

In a second aspect, there is provided a system comprising: a first electrically conducting circuit according to the first aspect and any of its embodiments; and second electrically conducting circuit according to the first aspect and any of its embodiments, wherein the first electrically conducting circuit and the second electrically conducting circuit share the same ground, which is a conducting ground plane.

In a third aspect, there is provided a quantum system for stabilizing a bosonic qubit comprising: the electrically conducting circuit according to the first aspect and any of its embodiments; a command circuit including at least a first microwave source and a second microwave source each arranged for delivering microwave radiation, wherein the first microwave source is provided by the current source configured to provide current to and receive current from each of the first and second conducting flux bias line portions; and a non-linear superconducting quantum circuit including at least one resonant portion having a first mode (a) with a first resonant frequency and a second mode (b) with a second resonant frequency, and a non-linear element coupled to or at least partially included in said at least one resonant portion, wherein the non-linear element is the magnetic-flux-tunable element. The quantum system is arranged such that, when: (i) the current source runs current through each of the first and second conducting flux bias line portions so as to deliver microwave radiation at a frequency equal to the absolute value of the difference between twice the first resonant frequency and the second resonant frequency to the non-linear element, and (ii) the second microwave source delivers microwave radiation at a frequency equal to the second resonant frequency to the second resonant portion to drive the second mode (b), the non-linear superconducting quantum circuit stabilizes a twodimensional manifold hosting said cat qubit.

BRIEF DESCRIPTION OF THE DRAWINGS

Various embodiments of the invention will now be described, by way of example only, and with reference to the accompanying drawings in which:

Figure 1 shows components of a quantum system for stabilizing a cat qubit by implementing a parametric dissipative stabilization with an ATS, which may comprise the flux bias lines of Figures 3-8, according to embodiments of the invention;
Figure 2 shows an example of prior art flux bias lines used to flux bias an ATS;
Figure 3 shows another example of prior art flux bias lines used to flux bias an ATS;
Figure 4 shows a schematic of components of an electrically conducting circuit, according to an embodiment of the invention;
Figure 5 shows components of an electrically conducting circuit, including conducting flux bias line portions, according to an embodiment of the invention;
Figure 6 shows components of an electrically conducting circuit, including conducting flux bias line portions, according to another embodiment of the invention;
Figure 7 shows components of an electrically conducting circuit similar to figure 6 but including current guiding portions, according to an embodiment of the invention;
Figure 8 shows components of an electrically conducting circuit similar to figure 5 but including current guiding portions, according to an embodiment of the invention;
Figure 9 shows results of a numerical simulation of an electrically conducting circuit, wherein the top panel shows the results of the calculation simulation performed on a prior art structure like that of Figure 3, whereas the bottom panel shows the results of the calculation simulation performed on a structure according to an embodiment of the invention; and
Figure 10 shows results of a numerical simulation of RF transmission between flux bias line portions of the structures of Figure 9.

DETAILED DESCRIPTION

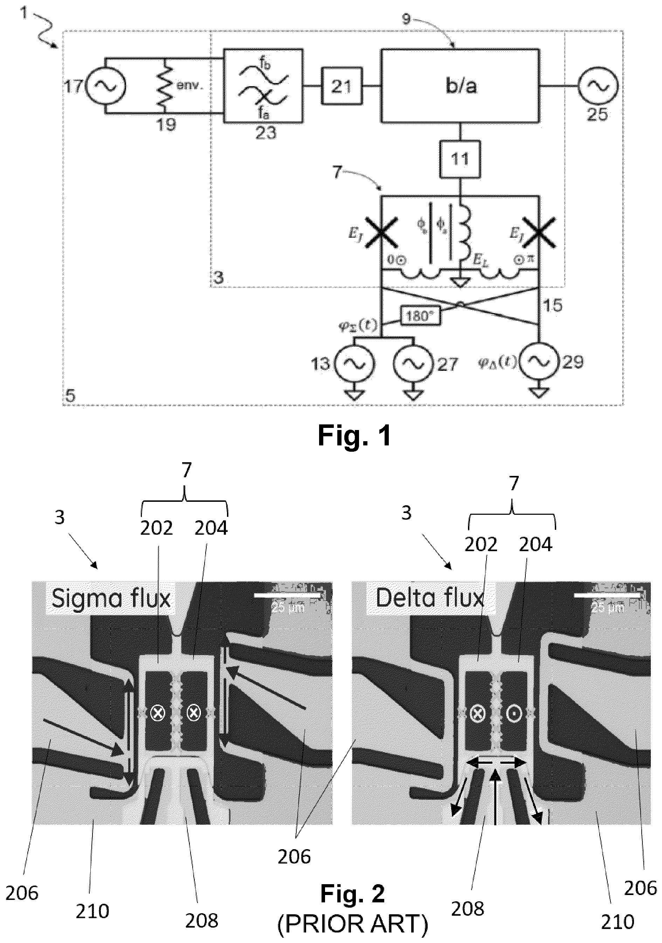

Figure 1 shows an exemplary quantum system 1 which is arranged to stabilize a so-called cat qubit. As illustrated in Figure 1, the quantum system 1 comprises a non-linear superconducting quantum circuit 3 and a command circuit 5. The non-linear superconducting quantum circuit 3 is arranged to make possible four-wave mixing between a first mode a and a second mode b. In the following, the first mode a is used as a memory hosting a cat qubit, while the second mode b is used as a buffer in between the cat qubit and the external environment.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The non-linear superconducting quantum circuit 3 is intended to be subject to microwave radiation delivered by the command circuit 5 in order to engineer various non-linear interactions between the first mode a and the second mode b. The frequency of each microwave radiation is tuned to select specific terms within the rotating wave approximation.

The non-linear superconducting quantum circuit 3 comprises a non-linear element 7 and at least one resonant portion 9. The non-linear element 7 may be arranged to engineer a jump operator $L_2^\alpha = \sqrt{\kappa_2}(a^2 - \alpha^2)$ for stabilizing the cat qubit, where $\kappa_2$ is a two-photon dissipation rate, a is the photon annihilation operator and $\alpha$ is a complex number defining the cat qubit. This jump operator can be realized by coupling a lossy buffer mode b with dissipation rate $\kappa_b$, and a four-wave mixing device to the cat qubit mode a and by engineering the Hamiltonian $H/\hbar = g_2(a^2 - \alpha^2)b^\dagger + \text{h.c.}$, where $b$ is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < \kappa_b$.

The four-wave mixing non-linear element 7 may for instance be an asymmetrically threaded SQUID (ATS), and the resonant portion 9, which is a linear microwave network b/a, is connected to the ATS. As described above, an ATS is an inductive dipole element formed by a pair of Josephson junctions (indicated by the crosses and $E_J$ label in Figure 1) being shunted by an inductance (indicated by the $E_L$ label in Figure 1). The inductance may be formed for instance from a linear array of Josephon junctions. The Josephson junctions are each arranged on a different superconducting path such that they each form a distinct loop with the inductance, such that the ATS can be viewed as two superconducting loops connected by the shared edge which comprises the inductance. The ATS is thus sensitive to the magnetic flux threaded through each of the two loops. As such, the ATS is a magnetic-flux-tunable element comprising two loops which are each flux-sensitive to magnetic flux. Said otherwise, the electric characteristics of the magnetic-flux-tunable element depend on both a magnetic flux threading the one of the loops and on a magnetic flux threading the other of the loops. For the avoidance of doubt, in the following "flux-sensitive" is taken to mean magnetic flux-sensitive.

It is known to the skilled person that an ATS can be used to engineer the 2-to-1 photon conversion, i.e. the first term $a^2$ of the jump operator LZin order to perform a parametric dissipative stabilization, as successfully shown by R. Lescanne *et al.* (2020). More particularly, such a 2-to-1 photon conversion between the first mode a and the second mode b is obtained by parametrically pumping the ATS at the frequency $f_p = |2f_a - f_b|$. Advantageously, the pump frequency satisfies $f_p \gg g_2$ to make this parametric pumping work as well as possible.

Contrary to the first implementations of this stabilization scheme proposed by Z. Leghtas *et al.* (2015) and S. Touzard *et al.* (2018) in which the superconducting circuit element used as a four-wave mixer was a transmon with a single Josephson junction, the solution developed by R. Lescanne *et al.* (2020) exploits the ATS design which has much lower cross-Kerr terms than the transmon and thus allowed to observe the exponential suppression of bit-flips.

The resonant portion 9 is arranged to be connected to the non-linear element 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the ATS, noted $\varphi_a$ for the first mode a and $\varphi_b$ for the second mode b.

In the schematic diagram of the quantum system 1 illustrated in Figure 1, the non-linear superconducting quantum system 3 comprises only one resonant portion, i.e. the resonant portion 9. However, it should be understood here that the non-linear superconducting quantum system 3 comprises at least one resonant portion, and typically two or more resonant portions to form two electromagnetic modes, a cat qubit mode and a buffer mode.

The command circuit 5 is arranged to deliver microwave radiations and optionally a DC bias. In the context of the quantum system 1, the command circuit 5 is arranged at least to drive the second mode b by delivering radiation at a frequency equal to the second resonant frequency $f_b$ to the resonant portion 9 since the parametric dissipative stabilization requires such a drive of the second mode b.

It is known to the skilled person that, in the case of the non-linear element 7 being an ATS 7, when biased at its flux working point (0 - $\pi$, namely 0 flux threaded through one of the loops and $\pi$ flux in unit of the flux quantum threaded through the other of the lopps), the Hamiltonian of the ATS 7 has the following "sin-sin" form: $H_{ATS}$ =

$$-2E_J \sin\big(\varphi_\Sigma(t)\big) \sin(\varphi) + \frac{E_L}{2}\big(\varphi - \varphi_\Delta(t)\big)^2$$
,

where $\varphi = \varphi_a(a + a^\dagger) + \varphi_b(b + b^\dagger)$ is the total superconducting phase difference across the ATS 7, $\varphi_a$ is the zero-point fluctuation of the phase of the first mode a across the ATS 7 and $\varphi_b$ is the zero-point fluctuation of the phase of the second mode b across the ATS 7, $E_J$ is the Josephson energy of the side junctions and $E_L$ is the inductive energy of a central inductance, $\varphi_\Sigma(t)$ corresponds to a common flux modulation of the two loops of the ATS 7 and $\varphi_\Delta(t)$ corresponds to a differential flux modulation of the two loops of the ATS 7. The former can be implemented by delivering microwave radiations through flux lines of the ATS 7 out of phase, the latter can be implemented by delivering microwave radiations through the two flux lines of the ATS 7 in phase.

Parametric pumping of the ATS 7 is typically done by pumping the common flux as pumping the differential flux merely displaces the modes coupled to the ATS 7. As an example, by pumping the common flux at the frequency $f_p = |2f_a - f_b|$, $\varphi_\Sigma(t) = \varepsilon_{2ph}\cos(2\pi f_p t)$, the nonlinear resonant part of the Hamiltonian writes in the rotating frame:

$$H_{ATS} = \frac{E_J \varepsilon_{2ph} \varphi_a^2 \varphi_b}{2}\big(a^2 b^\dagger + \text{h.c.}\big)$$
, which is typically the two-to-one photon exchange Hamiltonian needed to engineer the two-photon stabilization.

Referring to Figure 1 in general, the linear microwave network b/a is such that, when coupled via a linear coupler 11 to the non-linear element 7 which acts as an inductive element, the non-linear superconducting quantum circuit 3 has the first mode a and the second mode b at respective resonant frequencies $f_a$ and $f_b$ which participate in the non-linear element 7.

When an external DC magnetic field is set such that a 0 mod $2\pi$ magnetic flux threads one of the loop and a $\pi$ mod $2\pi$ flux threads the other loop, it is ensured that the ATS Hamiltonian has its "sin-sin" form. For clarity, the set-up applying the external DC magnetic field is not drawn on Figure 1 but can be applied via the two bottom mutual inductances of the ATS 7. A typical implementation consists in interleaving a bias-tee connected to a DC current source to input DC current into the system while letting the microwave radiations go through. As will be described below, the components which generate the required magnetic fields are current-carrying flux bias lines close to the ATS 7.

A microwave source 13 is set-up to modulate the common flux in the ATS 7. For this purpose, a microwave network 15 is used to split the radiation emitted by the microwave source 13 and apply it to each node of the ATS 7 with the correct phase. Alternatively, two different microwave sources could be used, each being simply coupled to a single node of the ATS 7 and their relative phase and amplitude being set so as to achieve the desired flux modulation.

When the microwave source 13 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 19 via a linear coupler 21 and a microwave filter 23 configured as a band pass filter with a frequency $f_b$.

Alternatively, the microwave filter 23 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 19.

Alternatively, it may be configured as a low-pass (respectively high-pass) filter if $f_a > f_b$ (resp $f_b > f_a$). In other embodiments, the microwave filter 23 can be omitted when coupling between the load 19 and substantially only the second mode b can be established. The skilled person thus understands that the first mode a has a high-quality factor while the second mode b has a low-quality factor.

As previously explained, the second mode b is driven at its resonant frequency $f_b$. This two-photon drive is performed by a microwave source 17 set at frequency $f_b$.

In the above, the load 19 can be seen as part of the command circuit 5 of figure 2, while the linear coupler 21 and the microwave filter 23 can be seen as part of the non-linear superconducting quantum circuit 3.

The command circuit 5 may further comprise a microwave source 25, a microwave source 27 and a microwave source 29. In addition to stabilizing the cat qubit, the command circuit 5 also enables measurement an observable of the cat qubit or application of a quantum gate to the cat qubit.

The microwave source 25 may be arranged to drive the first mode a by delivering microwave radiation at the frequency $f_a$ to the linear microwave network b/a. Such a drive of the first mode a causes the non-linear superconducting quantum circuit 3 to engineer a Hamil-

tonian Hz expressed as $H_z/\hbar = \epsilon_z a + \text{h.c.}$ , where the complex rate $\epsilon_z$ results from the amplitude and phase of the drive of the first mode a.

The microwave source 27 is set-up, in addition to the microwave source 13, to modulate the common flux in the ATS 7. The microwave source 27 may be arranged to deliver microwave radiation for causing the non-linear superconducting quantum circuit 3 to engineer a Hamiltonian. For instance, such a Hamiltonian yields through longitudinal coupling between the first mode a and the second mode b, which may be used to apply a Z gate.

Finally, the microwave source 29 is set-up to modulate the differential flux in the ATS 7 through the microwave network 15. The microwave source 29 can be used to reduce spurious Hamiltonian terms induced by the microwave source 27. It is to be noted that the microwave network 15 is used for convenience but can be omitted and the microwave source 29 and the microwave source 27 could be applied directly to both nodes of the ATS 7, their relative phase and amplitude being set so as to achieve the desired flux modulation.

For the sake of completeness, it may also be noted that the microwave source 29 can be used, instead of the microwave source 17, to deliver microwave radiation at a frequency $f_b$ to the linear microwave network b/a to drive the second mode b.

Typically, the circuit has flux lines through which radiation can be delivered to provide (and optionally modulate) the common flux (herein also referred to as $\varphi_\Sigma$ or "sigma flux") and provide (and optionally modulate) the differential flux (herein also referred to as $\varphi_\Delta$ or "delta flux"). These are generally referred to as the two bias modes. As such, the flux lines may deliver both a DC-bias (setting the working point described above by applying DC current to thread the ATS loops with the relevant magnetic fluxes) and an RF-bias (superposed modulation to permit the time-dependent magnetic flux terms to "pump" the ATS as discussed above).

The flux lines must be able to induce at least $2\pi\varphi_0$ of flux through each loop of the ATS in the two bias modes. Moreover, the flux lines must not be the dominant source of loss such that they limit the lifetime of the mode that they are biasing or any other modes that are coupled to it. The lifetime of the mode is inversely proportional to the sum of the loss rates through all ports that are connected to the mode. It will be appreciated that these requirements apply not just for the ATS, but may generally apply to any two conducting loops which require different fluxes to be threaded through each loop.

Broadly, the goal of the flux lines is to ensure the current coming through the flux lines and the return current are guided in such a way as to induce the necessary flux in the ATS loops. In the following, like features are indicated with like reference numerals. As will be appreciated, "sigma flux" and "common flux" may be used interchangeably. Similarly, "delta flux" and "differential flux" may be used interchangeably.

Figure 2 shows a prior art design of flux lines as part of a non-linear superconducting quantum circuit 3 through which radiation can be delivered to modulate a common flux and/or a differential flux of the ATS 7. The left-hand panel designates the common flux operation or mode, whereas the right-hand side designates the differential flux operation.

The ATS 7 has a left loop 202 and a right loop 204, both of which are thus magnetic-flux sensitive portions. The two ends of a first flux bias line 206 are shown. The flux bias line 206 is connected to a source (not shown), such that current runs through both ends of the flux bias line and returns to ground through the surrounding ground plane 210. The arrows shown on top of the two ends of the flux bias line 206 in the left-hand panel indicate the strength and direction of the currents, resulting in an equal amount of magnetic flux threading both the left 202 and right 204 loops. A second flux bias line 208 is connected to another source (not shown), and splits equally at its end to return to the ground plane 210. The arrows shown on top of the end of the flux bias line 208 in the right-hand panel indicate the direction of the currents, resulting in an equal but opposite amount of magnetic flux threading the left 202 and right 204 loops.

In this implementation, each flux line 206, 208 can excite their respective bias mode by guiding the current as it passes around the ATS 7. Only one flux line is needed for a given bias mode. This flux line design that allows for biasing of the ATS 7 in a given mode using or tuning only one of the flux lines. However, a prominent issue with this design was that each flux line did not perfectly apply its designated bias mode and significant compensation was needed to be applied via the other flux line to achieve the desired flux. In addition, due to the geometrical design, a line crossing was required (achieved with a bondwire, not shown) for the delta flux line since the sigma flux line needed to split in two to apply the desired current flow. The presence of the bondwire adds an additional resistive element and may impact the lifetime of the mode being biased.

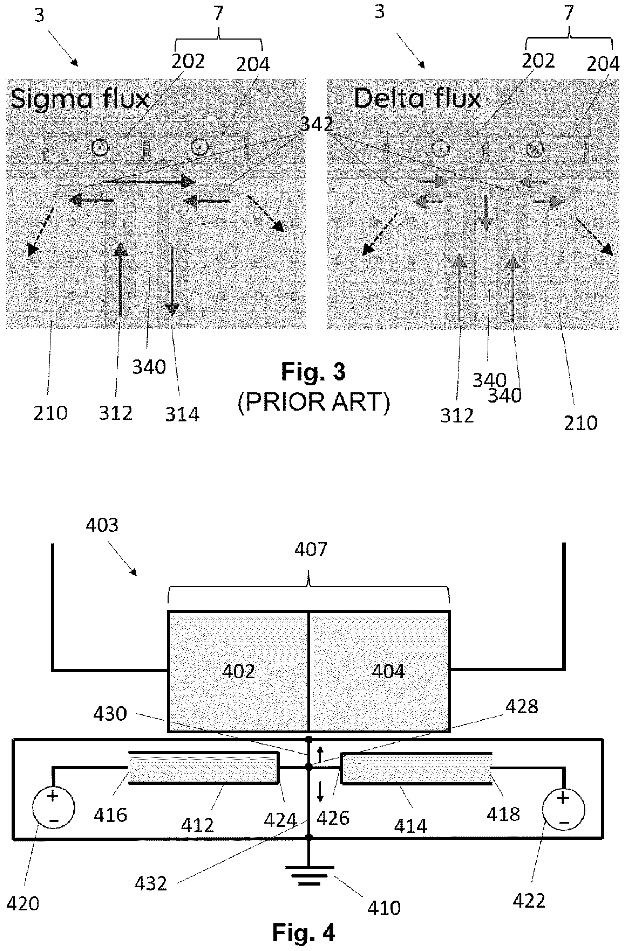

Figure 3 shows an improved prior art design of flux lines through which the common flux and a differential flux can be delivered to the ATS 7. The left-hand panel shows the flow of the majority of DC current in solid arrows that results in sigma flux, which is achieved by driving the left 312 and right 314 co-planar waveguide flux line portions with opposing voltages to promote current flow in one direction. The right-hand panel shows the flow of the majority of DC current in solid arrows that results in delta flux, which is achieved by driving the left 312 and right 314 co-planar waveguide (CPW) flux line portions with similar voltages to promote current flowing in opposite directions passed the left 202 and right 204 loops of the ATS, wherein the current flows meet and return to ground through the shared co-planar conducting portion 340 between the left 312 and right 314 CPW flux line portions. Current-guiding portions 342 are provided to help guide the electrical currents flowing from the distal ends of the left 312 and right 314 CPW flux line portions, so as to achieve the desired magnetic field profiles.

This prior art design resulted in a higher mutual inductance between the flux lines and the ATS 7 when operating the sigma flux mode as compared to when operating the delta flux mode (mutual inductance in sigma flux around three times greater than the mutual inductance in delta flux). For the avoidance of doubt, it is well known that when two circuits carrying time-varying current are close to one another, the magnetic flux through each circuit varies because of the changing current I in the other circuit. Consequently, an emf is induced in each circuit by the changing current in the other. This type of emf is called a mutually induced emf, and the phenomenon that occurs is known as mutual inductance (M). In the present case of flux lines biasing an ATS, the only current that is considered is current coming from the flux lines and the only flux that is considered is the flux being induced in the ATS loops, such that the mutual inductance between each flux line and a given ATS loop becomes $M = (\phi_{ATS}/I_{fluxline}$, wherein $\phi_{ATS}$ is the flux that is induced in a given loop of the ATS and $I_{fluxline}$ is the current that is going through a given flux line. We can calculate multiple mutual inductances here by considering the current in either flux line to either ATS loop in the cases of one of the flux lines being excited or both excited (in phase or in anti-phase which are the delta flux and sigma flux bias modes, respectively).

The mutual inductance is higher in sigma flux mode in the design of Figure 3 because most of the current from one CPW flux line portion 312, 314 is forced to flow next to the ATS loops 202,204 to get to the other CPW flux line portion 312, 314. In the delta flux mode, a smaller fraction of the return current is induced to flow next to the ATS loops 202,204 while a large portion splits off to the ground 210 on the outside of the flux lines. Moreover, this design may result in non-negligible stray currents (schematically shown by the dashed arrows), which may induce further unwanted magnetic fluxes in other ATS elements or other magnetic-flux-tunable elements near-by on the chip, thus generating undesirable flux crosstalk.

Various embodiments of the invention will now be described. Embodiments may be used in combination with the features described above in relation to Figure 1. In particular, the embodiments described below may enable flux-biasing the ATS 7 in Figure 1 to stabilize a cat-qubit.

Figure 4 shows a schematic of components of an electrically conducting circuit 403. The electrically conducting circuit 403 a magnetic-flux-tunable element 407 comprising a first flux-sensitive portion 402 and a second flux-sensitive portion 404. The electric characteristics of the magnetic-flux-tunable element 407 depends on both a magnetic flux threading the first flux-sensitive portion 402 and on a magnetic flux threading the second flux-sensitive portion 404.

A first conducting flux bias line portion 412 and a second conducting flux bias line portion 414 each pass adjacent to the magnetic-flux-tunable element 407. In particular, each conducting flux bias line portion 412, 414 has a respective first distal end 416, 418 configured to receive a current from a current source 420, 422. The current sources 420, 422 may be part of the electrically conducting circuit 403 as shown (e.g. "on-chip"), or may be separate from it (e.g. "off-chip"), with the distal ends 416, 418 being coupled thereto by relevant electrical connections so as to provide current to the flux bias line portions 412, 414.

Each conducting flux bias line portion 412, 414 has a respective second distal end 424, 426 adjacent to the magnetic-flux-tunable element 407. Preferably, the respective second distal ends 424, 426 are each positioned closest to a respective one of the first 402 and second 404 flux-sensitive portions. The second distal ends 424, 426 substantially face towards each other and are separated from each other by a spacing. The second distal ends 424, 426 are directly connected to each other across the spacing via a conducting bridging portion 428 which is connected to ground 410.

In particular, the conducting bridging portion 428 includes a directional conducting portion 430 configured to enable current to flow in a direction towards the magnetic-flux-tunable element 407, as indicated by the short upward-facing vertical arrow in Figure 4. As such, this directional conducting portion 430 enables a larger proportion to flow next to the ATS loops 202,204 in the delta flux mode, as compared to prior art designs.

The conducting bridging portion 428 may be configured to enable at least some current to flow directly from the conducting bridging portion 428 to ground 410 in a direction away from the magnetic-flux tunable element 407, as indicated by the short downwardfacing vertical arrow in Figure 4. The circuit may also comprise one or more return current portions which connect the conducting bridging portion to ground 410, as shown by the connecting lines in Figure 4.

Figure 5 shows an embodiment of components of superconducting conducting circuit 3 of Figure 1, and in particular shows the flux bias lines used to thread ATS 7 with the required magnetic flux bias between the two loops 202, 204 of the ATS 7. The left-hand panel shows the sigma flux bias mode of operation, whereas the right-hand panel shows the delta-flux bias mode of operation. The larger black arrows superposed on the panels indicate an example of the direction of flow of the electrical current in either mode.

The first conducting flux bias line portion 412 and the second conducting flux bias line portion 414 are both co-planar waveguides (CPWs). They each have an inner conducting transmission line 412a, 414a separated from the surrounding metallic ground plane 410 via a pair of insulating tracks 412b, 414b. The insulating tracks 412b, 414b are regions of the chip wherein the metallic ground plane 410 has been etched away to reveal the underlying substrate. The surrounding metallic ground plane 410 includes a shared co-planar conducting portion 440 positioned in between the first 412 and second 414 flux bias line portions. Thus, the surrounding ground plane 410 and shared co-planar conducting portion 440 acts as the return conductors of the CPWs. The surrounding ground plane 410 and shared co-planar conducting portion 440 each contain a plurality of insulating dots 442 which are provided to trap vortices.

Each of the flux bias line portions 412, 414 has a respective first distal end for receiving current from a current source (not shown), and a respective second distal end 424, 426 each positioned closest to a respective one of the left 202 and right 204 loops of the ATS. That is, the second distal end 424 of the first flux bias line portion 412 is closest to the left loop 202 whereas the second distal end 426 of the second flux bias line portion 414 is closest to the right loop 204.

The second distal ends 424, 426 substantially face towards each other and are separated from each other by a spacing, and are directly connected to each other across the spacing via a conducting bridging portion 428 which is connected to ground 410. That is, no other circuit element is positioned between the second distal ends 424, 426, such that the shortest conducting path between the two distal ends 424,426 extends across the bridging portion. In this way, the first and second conducting flux bias line portions 412, 414 almost form a single CPW which is only interrupted by the conducting bridging portion positioned closest to the ATS 7. As such, stray currents are minimised, especially in the sigma flux mode (shown in the left-hand panel of Figure 5), as most of the return current will flow through one of the flux bias line portions (e.g. the second flux bias line portion 3414 in the example current flow shown in the left-hand panel of Figure 5).

The conducting bridging portion 428 includes a first directional conducting portion 430 which allows current to flow in a direction towards the ATS 7. In particular, this directional conducting portion 430 enables a larger proportion in the delta flux mode to flow initially towards the ATS 7, and then return to ground via flowing next to the ATS loops 202,204 in opposite directions, as shown in the right-hand panel of Figure 5, thereby increasing the mutual inductance in the delta flux bias mode.

The conducting bridging portion 428 also includes a second directional conducting portion 432 which enables some current to flow directly from the conducting bridging portion 428 to ground through the shared co-planar conducting portion 440, and therefore in a direction away from the ATS 7. The present inventors have discovered that providing both the first 430 and second 432 directional conducting portions as part of the conducting bridging portion 428 (indicated via the dotted lines on the left-hand panel of Figure 5) enables the mutual inductance to be substantially similar in both the sigma and delta flux bias modes. This is advantageous because the induced flux noise in the loops will be the same in each bias mode. A larger mutual inductance in one of the bias modes relative to the other means that not only will more flux be induced in the loops but also more flux noise due to the noise on the voltage sources.

The first 412 and second 414 flux bias line portions each respectively include a turning part 434, 436 and a linear part 444, 446, as indicated on the right-hand panel of Figure 5. The turning parts 434, 436 are provided between the second distal ends 424, 426 and the linear parts 444, 446. The linear parts 444, 446 are substantially parallel prior to the turning parts 434, 436 as the flux bias line portions 412, 414 approach the ATS 7, which minimises the chip real-estate taken up by the flux bias line portions in the region proximal to the ATS 7. As such, the turning parts 434, 436 turn flux bias line portions such that the second distal ends 424, 426 substantially face towards each other.

The first 412 and second 414 flux bias line portions are substantially reflection symmetric with respect to one another. The axis of reflection symmetry is also aligned with the reflection axis of the ATS 7 (namely, defined by the central inductor shunting the ATS 7), as indicated by the dashed reflection axis 438 in the right-hand panel of Figure 5. The central inductor of the ATS 7 may be considered as a connecting element shared between both loops.

As will be appreciated, the ATS 7 need not be entirely reflection symmetric - for instance is can be envisaged that one loop 202,204 is larger than the other loop 202, 204. Still there may be a distinct conceptual line 438 which delimits one loop 202 from the other 204. In this embodiment, the first 412 and second 414 flux bias line portions may still preferably be provided substantially reflection symmetric with respect to one another about said conceptual line, such that one of the flux bias line portions is closest to one loop, and the other of the flux bias line portions is closest to the other loop.

In the embodiment of Figure 5, the turning parts 434, 436 are smoothly curvilinear. The present inventors have recognised that avoiding sharp corners may avoid sharp build up of electric fields, which may e.g. undesirably increase the single-boson loss rate of the first "memory" mode which is coupled to the ATS 7 and used to host a cat-qubit.

In an alternative embodiment, the inventors have recognised that the effects of some sharp corners may sometimes be tolerated. For instance, Figure 6 shows another embodiment of components of superconducting conducting circuit 3 of Figure 1. Figure 6 is similar to Figure 5, but the turning parts 434, 436 are rectilinear. As a result, a part of each of the flux bias line portions extends from the turning parts 434, 436 to the second distal ends 424, 426 substantially horizontal to the ATS. An advantage of this design is that it enables a larger amount of current to flow in a direction parallel to the ATS 7, thus increasing the amount of magnetic flux which is able to be threaded through the left 202 and right 204 loops of the ATS 7 for a similar voltage (i.e. similar currents flowing through the first 412 and second 414 flux bias line portions). In particular, the second distal ends 424, 426 can be brought particularly close to the ATS 7.

Both Figures 5 and 6 thus show turning portions, which enable current to be provided from a distance source to be brought close to the ATS 7 and flow at least for a portion in a direction substantially horizontal to the ATS 7. Advantageously, the turning portions are provided inside of outer non-linear elements of ATS 7, to avoid undesirable over-coupling capacitively to the electromagnetic mode being biased via the ATS 7 (and thereby avoiding increasing the loss from the electromagnetic mode, such as the memory mode, via this over-coupling). Each conducting flux bias line portion may be positioned a distance (shown by 480 in Figure 6) from the magnetic flux tunable element of preferably between 30-40 microns (e.g. especially in the case of using an ATS 7 for stabilizing a cat qubit in a superconducting circuit), as measured along the shortest conceptual line (as shown by the dot-dashed arrowed line 484 in Figure 6) drawn between the centre point of the second distal end and a conceptual line (shown by 482 in Figure 6) passing through the centre of both flux-sensitive portions. Of course, the present Inventors envisage other embodiments of the ATS or other flux-tunable elements which may require the conducting flux bias line portions to be closer or further away from the magnetic flux tunable element, as appropriate. For instance, the minimum distance may be defined as the outer insulating track of the flux sensitive portion touching a portion of the magnetic flux-tunable element. Said otherwise, a minimum possible distance can be defined as where insultating track (e.g. the gap of the CPW) of one of the conducting flux bias line portions does not protrude into the inside of either flux loop and a maximum possible distance can be defined as the maximum point before the flux lines can no longer induce a sigma and delta flux bias modes into the flux loops.

The spacing separating the second distal ends of the conducting flux bias line portions is preferably between 1 and 100 microns, and most preferably on the order of 10 microns, as measured along the shortest conceptual line (as shown by the arrowed line 486 in Figure 6) drawn between the centre point of the second distal end of the first conducting flux bias line portion and the centre point of the second distal end of the second conducting flux bias line portion. Again, the present Inventors envisage other embodiments of the ATS or other flux-tunable elements which may require the second distal ends of the conducting flux bias line portions to be closer or further away from the each other, as appropriate.

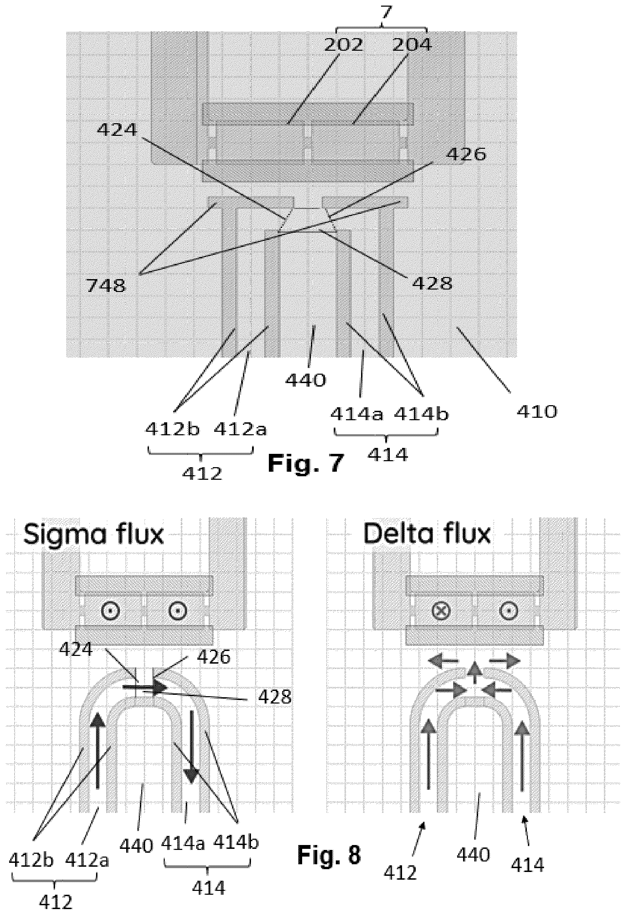

Figure 7 shows components of an electrically conducting circuit similar to Figure 6 but including current guiding portions, according to an embodiment.

In Figure 7, the first 412 and second 414 flux bias portions include current guiding portions 748. In this particular embodiment, the current guiding portions are extended top parts of the insulating tracks 412b, 414b of the flux bias line portions, and are thus configured to guide the current near the ATS 7, thereby increasing mutual inductance. As will be appreciated, by playing with the lengths of the current guiding portions, the horizontal length of the flux bias line portions may be tuned such that more (or less) of the current flows alongside (i.e. parallel with) the ATS. As will be appreciated "parallel" here means flowing in a direction parallel with an axis extending from the left loop 202 to the right loop 204 of the ATS 7.

Furthermore, the pairs of insulating tracks 412b, 414b either side of the transmission lines 412a, 414a of the flux bias line portions 412, 412 need not follow as substantially parallel tracks right up to the second distal ends 424, 426. For instance, as shown in Figure 7, the inner-most of the insulating tracks 412b, 414b (delimiting the shared co-planar conducting portion 440) each terminate at the second distal ends 424, 426 without turning, such that the conducting bridging portion 428 has a substantially trapezoidal shape as indicated by the dashed lines in Figure 7. This changes the how the current flow is guided back towards the shared co-planar conducting portion 440.

Figure 8 shows components of an electrically conducting circuit similar to Figure 5 but including current guiding portions, according to an embodiment. In Figure 8, current guiding portion 848 connects the inner-most of the insulating tracks 412b, 414b such that current from the flux bias line portions 412, 414 cannot flow to ground through the shared co-planar conducting portion 440. As a result, in this embodiment, the mutual inductance of the delta flux mode is increased so as to be greater than the mutual inductance of the sigma flux bias mode. This is because all of the current is forced to flow towards the ATS 7 then horizontally close to the ATS 7, as indicated by the arrows in the right-hand panel of Figure 8. It should be noted that, in the case of Figure 8, the second distal ends 424, 426 can be defined as region of each flux bias line portion perpendicular to the termination of the outer insulating track of the pairs of tracks 412b, 414b, as shown by dotted lines in the left-hand panel of Figure 8. What is important, is that the two second distal ends 424, 426 of the flux bias line portions 412, 414 face each other, such that the first 412 and second 414 conducting flux bias line portions can still be viewed as forming a single conducting line which is interrupted by the conducting bridging portion 428.

Thus, the inventors have discovered that: (i) by further providing various current guiding portions; and/or (ii) choosing when to terminate one of the insulating tracks relative to the other of the insulating tracks of a given pair of insulating tracks 412b, 414b - for the same values of current applied, the mutual inductance in the delta flux mode can be increased more or less relative to the mutual inductance in the sigma flux mode, whilst maintaining the benefits discussed above from having the distal ends of the flux bias portions substantially facing each other.

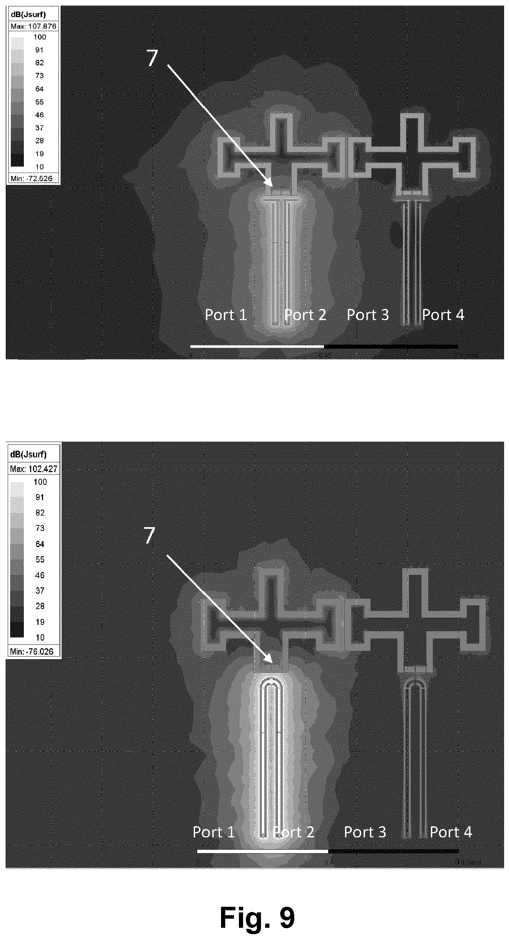

Figure 9 shows a numerical simulation of an electrically conducting circuit, wherein the top panel shows the results of the calculation simulation performed on a prior art structure like that of Figure 3, whereas the bottom panel shows the results of the calculation simulation performed on a structure according to an embodiment of the invention. Both show a first system comprised of a first pair of flux bias line portions for coupling to a first ATS 7, which is itself galvanically coupled to a first electromagnetic resonator. The first system is positioned adjacent to a second system comprised of a second pair of flux bias line portions for coupling to a first ATS 7 also coupled a second electromagnetic resonator (only one of the ATSs has a reference label for clarity), and both the first and second systems are formed from a superconducting material. The first and second systems share the same planar superconducting ground plane. The density of electric current on the superconducting areas is shown with the grayscale ranging from black through to white. The simulation calculations were performed for the sigma flux mode of operation, with the requisite currents being set such that the same flux biasing was achieved through the left-hand ATS of the prior art structure as compared to the left-hand ATS of the structure according to an embodiment of the invention.

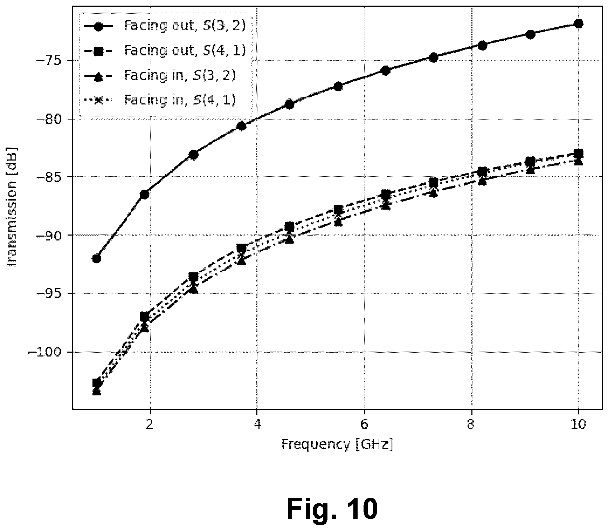

As can be seen , the top panel (prior art) shows a larger spread of the surface current density when biased in the sigma flux mode as compared to the bottom panel (structure according to an embodiment of the invention). Stray current passing close to the ATS of a neighbouring resonator may DC bias it, leading to an increase in undesirable crosstalk. Thus, less stray current is generated by the flux bias lines of the structure according to an embodiment of the present invention, which yields a significant improvement. Figure 10 shows a numerical simulation of RF transmission between lines from the first pair of flux bias line portions to the second pair of flux bias line portions, for both the prior art structure and the structure according to an embodiment of the invention shown in Figure 9. The "facing out" labels indicate results from the structure of the top panel of Figure 9 (prior art structure), whereas the "facing in" labels indicate results from the structure of the bottom panel of Figure 9 (structure according to an embodiment of the invention). The data points indicate scattering-parameters which quantifies transmission between neighbouring lines. In particular, this RF crosstalk was calculated for S("output port", "input port"), wherein the ports are indicated by the port numbers on Figure 9.

Thus, as can be seen, when lines are facing one another there is less RF transmission to the neighbouring lines i.e. when pumping one resonator the other has less stray RF to the other resonator. Thus, the structure according to an embodiment of the invention offers much better RF isolation as compared to that of the prior art. In particular, S(3,2) is the transmission between the inner most flux bias line portions, which shows a significant improvement ("facing in" transmission being much lower than "facing out" transmission).

Although the above embodiments of Figures 5-8 have been described with respect to a superconducting circuit comprising an ATS, it will be appreciated that the flux bias lines according to the present disclosure may advantageously be used to flux bias other magnetic-flux-tunable elements comprising a first flux-sensitive portion and a second flux-sensitive portion.

For instance, a superconducting circuit comprising two superconducting loops connected by so-called hybrid Josephson junctions with three or more superconducting terminals coupled to a semiconductor region may be used to generate Andreev bound states or Andreev matter by controlling the magnetic fluxes threading each of the two superconducting loops. This is described, for instance, in "Phase-engineering the Andreev band structure of a three-terminal Josephson junction", M. Coraiola et.al., Nature Communications 14, 6784 (2023). The flux bias lines of the present disclosure may be used to control the magnetic fluxes threading each of the two superconducting loops.

Moreover, the magnetic-flux-tunable element need not be superconducting. For instance, laterally spaced semiconductor quantum rings, or aligned pairs of carbon nanotubes, may provide examples of other magnetic-flux-tunable elements comprising a first flux-sensitive portion and a second flux-sensitive portion.

## Claims

1. An electrically conducting circuit, comprising:

   a magnetic-flux-tunable element comprising a first flux-sensitive portion and a second flux-sensitive portion, wherein the electric characteristics of the magnetic-flux-tunable element depend on both a magnetic flux threading the first flux-sensitive portion and on a magnetic flux threading the second flux-sensitive portion; and a first conducting flux bias line portion and a second conducting flux bias line portion, each portion passing adjacent to the magnetic-flux-tunable element, and each conducting flux bias line portion having:

   (i) a respective first distal end configured to directly receive and directly return a current from a current source, and
   (ii) a respective second distal end adjacent to the magnetic-flux-tunable element;

   wherein the second distal ends face towards each other and are separated from each other by a spacing;
   wherein the second distal ends are directly connected to each other across the spacing via a conducting bridging portion; and
wherein the conducting bridging portion is connected to ground.

2. The electrically conducting circuit of claim 1, wherein the conducting bridging portion comprises a directional conducting portion configured to enable current to flow in a direction towards the magnetic-flux-tunable element.

3. The electrically conducting circuit of claims 1 or 2, wherein the conducting bridging portion comprises a directional conducting portion configured to enable current to flow in a direction away from the magnetic-flux-tunable element.

4. The electrically conducting circuit of claim 3, wherein the conducting bridging portion is connected to ground via both directional conducting portions.

5. The electrically conducting circuit of any preceding claim, comprising a conducting plane, wherein the conducting plane is ground .

6. The electrically conducting circuit of claim 5, wherein the conducting bridging portion is directly connected to the conducting plane.

7. The electrically conducting circuit of any preceding claim, wherein the first flux bias line comprises a turning portion which passes adjacent to the first flux-sensitive portion of the magnetic-flux-tunable element, and wherein the second flux bias line comprises a turning portion which passes adjacent to the second flux-sensitive portion of the magnetic-flux-tunable element.

8. The electrically conducting circuit of claim 7, wherein the turning portion is curvilinear.

9. The electrically conducting circuit of ay preceding claim, wherein the each of the conducting flux bias lines are positioned a distance from the magnetic flux tunable element of less than 1 mm as measured along the shortest conceptual line drawn between the centre point of the second distal end and the conceptual line passing through the centre of both flux-sensitive portions.

10. The electrically conducting circuit of any preceding claim, wherein the spacing has a separation of less than 500 microns as measured between the centre point of the second distal end of the first conducting flux bias line portion and the centre point of the second distal end of the second conducting flux bias line portion.

11. The electrically conducting circuit of any preceding claim, wherein the first flux-sensitive portion and the second flux-sensitive portion are positioned either side of an axis; wherein the first flux-sensitive portion and the second flux-sensitive portion share a connecting element which is substantially aligned with the axis; and wherein the first and second flux bias line portions are positioned either side of the axis such that the respective second distal ends face each other either side of the axis.

12. The electrically conducting circuit of claim 11, wherein the first flux-sensitive portion and the second flux-sensitive portion are substantially reflection symmetric about the axis, and wherein the first and second flux bias line portions are substantially reflection symmetric about the axis.

13. The electrically conducting circuit of any preceding claim, wherein the electrically conducting circuit is comprised of electrically conducting material deposited on a dielectric substrate.

14. The electrically conducting circuit or any preceding claim, wherein the electrically conducting circuit is a superconducting circuit.

15. The electrically conducting circuit of claim 14, wherein the magnetic-flux-tunable element is an asymmetrically biased SQUID (ATS) comprised of a pair of non-linear elements shunted by an inductor, wherein the inductor and one of the non-linear elements together form part of a first superconducting loop delimiting the first flux-sensitive portion, and wherein the inductor and the other of the non-linear elements together form part of a second superconducting loop delimiting the second flux-sensitive portion.

**Fig. 1**

**Fig. 2**
(PRIOR ART)

3

7

202    204

Sigma flux

342

**Fig. 3**
(PRIOR ART)

340

210    312    314

3

7

202    204

Delta flux

342

340
340

312

210

403

407

402    404

430    428

416    412    424    426    414    418

420    432    410    422

**Fig. 4**

Fig. 5

Fig. 6

Fig. 7

Sigma flux

Delta flux

Fig. 8

Fig. 9

**Fig. 10**

## EUROPEAN SEARCH REPORT

**Application Number**

EP 24 30 5495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/182571 A1 (INTEL CORP [US]) 4 October 2018 (2018-10-04) * paragraph [0023] - paragraph [0025] * * paragraph [0071] - paragraph [0089] * * paragraph [0097] * * paragraph [0101] - paragraph [0106] * * figures 1, 3a-6b *<br>----- | 1-15 | INV. G06N10/40 |

**TECHNICAL FIELDS SEARCHED (IPC)**

G06N

The present search report has been drawn up for all claims

| Place of search | Date of completion of the search | Examiner |
|---|---|---|
| The Hague | 1 November 2024 | Baldan, Marco |

EPO FORM 1503 03.82 (P04C01)

## ANNEX TO THE EUROPEAN SEARCH REPORT
## ON EUROPEAN PATENT APPLICATION NO.

EP 24 30 5495

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2024

| Patent document cited in search report | Publication date | Patent family member(s) | Publication date |
|---|---|---|---|
| WO 2018182571 A1 | 04-10-2018 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. CORAIOLA**. Phase-engineering the Andreev band structure of a three-terminal Josephson junction. *Nature Communications*, 2023, vol. 14, 6784